# EUROPÄISCHE PATENTSCHRIFT

(11) **EP 3 778 041 B1**
(45) Veröffentlichungstag und Bekanntmachung des Hinweises auf die Patenterteilung: **12.07.2023**
(21) Anmeldenummer: 20191977.6
(22) Anmeldetag: 09.08.2018
(51) Int. Cl.: B07B 4/02, B07B 9/02, B07B 11/02, B07B 11/06, B27N 1/00, C01B 33/20

(54) **VORRICHTUNG ZUR ABTRENNUNG UND/ODER GEWINNUNG VON SILIKATPARTIKELN AUS PFLANZLICHEM MATERIAL**
DEVICE FOR SEPARATING AND / OR RECOVERING SILICATE PARTICLES FROM PLANT MATERIAL
DISPOSITIF DE SÉPARATION ET/OU D'EXTRACTION DE PARTICULES DE SILICATE D'UNE MATIÈRE VÉGÉTALE

(30) Priorität: 31.08.2017 DE 102017120033
(43) Veröffentlichungstag der Anmeldung: 17.02.2021
(62) Teilanmeldung aus: 18755766.5
(73) Patentinhaber: Siempelkamp Maschinen- und Anlagenbau GmbH, 47803 Krefeld (DE)
(72) Erfinder: Berns, Jochem, 47929 Grefrath (DE); Fechner W. hans, 40489 Düsseldorf (DE); Schöler, Michael, 47509 Rheurdt (DE); Trummel, Michael Schöler, 40547 Düsseldorf (DE)
(74) Vertreter: Andrejewski - Honke Patent- und Rechtsanwälte Partnerschaft mbB

(56) Entgegenhaltungen:
- EP-A2- 1 331 045
- WO-A1-2011/014137
- DE-B- 1 134 941
- FR-A5- 2 102 604
- KR-B1- 101 048 410
- US-A- 2 222 861
- US-B1- 6 652 695

## Beschreibung

Die Erfindung betrifft eine Vorrichtung zur Abtrennung und/oder Gewinnung von Silikatpartikeln aus pflanzlichem Material. Bei dem pflanzlichen Material bzw. Ausgangsmaterial handelt es sich um lignocellulosehaltiges Ausgangsmaterial, z. B. Holz, besonders bevorzugt jedoch um sogenannte Einjahrespflanzen. Bei Einjahrespflanzen handelt es sich um solche Pflanzen, die von der Keimung des Samens über die Ausbildung der gesamten Pflanze, die Blütenbildung, Befruchtung bis zur Reife des neuen Samens lediglich eine Vegetationsperiode benötigen. Beispiele für solche schnellwachsenden Pflanzen sind Getreidepflanzen (bzw. das daraus entstehende Stroh), z. B. Reis bzw. Reisstroh, aber auch Bambus sowie Bagasse, Schilf oder Pfahlrohr.

Im landwirtschaftlichen Anbau, z. B. Getreide- oder Reisanbau, entsteht Stroh in der Regel als Rückstand, der entweder auf den Feldern belassen oder verbrannt wird. Im Übrigen wurde auch bereits eine Verwendung des Strohs für die Herstellung von Faserplatten, z. B. auf Basis von Reisstroh vorgeschlagen (vgl. DE 10 2009 057 916 B4 und DE 10 2015 120 653 A1). Bei einer solchen Verwendung von Einjahrespflanzen für die Plattenherstellung werden zunächst mit Zerkleinerungsvorrichtungen entsprechend geeignete streufähige Partikel (Späne oder Fasern) hergestellt und diese beleimt. Diese beleimten Partikel werden dann mit einer oder mehreren Streuvorrichtungen unter Bildung einer Streugutmatte auf z. B. einem Streubandförderer aufgestreut und einer Presse zugeführt, wobei die Streugutmatte in der Presse unter Anwendung von Druck und Wärme zu einer Platte verpresst wird. Grundsätzlich ist die Nutzung von Einjahrespflanzen, z. B. daraus zurückbleibendem Stroh, eine vielversprechende Alternative zur Verwendung von Holz für die Herstellung von Faserplatten oder Spanplatten. Problematisch im Zusammenhang mit der Verarbeitung von Partikeln aus Einjahrespflanzen, z. B. Reisstroh, ist die Tatsache, dass Einjahrespflanzen während des Wachstums hohe Mengen an Silikat einlagern, welches in den Produktionsprozess eingebracht wird und diesen stören kann, da solche mineralischen Silikate aufgrund ihrer Eigenschaften zu hohem Verschleiß in verschiedenen Anlagenkomponenten führen können. Aus diesem Grunde wurde z. B. in der DE 10 2009 057 916 B4 bereits vorgeschlagen, Komponenten eines Mischers für die Beleimung von Fasern verschleißfest auszubilden, da die Silikate die Oberflächen der Komponenten stark beanspruchen.

Unabhängig davon gibt es zahlreiche (industrielle) Einsatzzwecke für Silikate, z. B. als Zusatz bei der Herstellung von Dämmplatten, Brandschutzplatten oder auch als Schleifmittel. - Hier setzt die Erfindung ein.

Im Übrigen sind Sichter zum Trennen von Material aus dem Stand der Technik grundsätzlich bekannt. So beschreibt z. B. die US 2010/0163463 A1 eine Vorrichtung und ein Verfahren zum Abtrennen von Fremdkörpern aus Holz- bzw. Pflanzenpartikeln. US 2222861 A zeigt eine zweistufige Trennvorrichtung von Stielen und Trauben. Das Dokument DE 10 2015 120653 A1 beschreibt eine Vorrichtung mit den Merkmalen, wie sie im Oberbegriff des Anspruchs 1 offenbart sind.

Der Erfindung liegt das technische Problem zugrunde, eine Vorrichtung zur Abtrennung und/oder Gewinnung von Silikaten aus pflanzlichem Material zu schaffen. Damit sollen sich z. B. die in der Plattenproduktion durch Silikate hervorgerufenen Probleme vermeiden lassen. Alternativ oder ergänzend soll eine neue und wirtschaftliche Möglichkeit der Herstellung bzw. Gewinnung von Silikaten angegeben werden.

Zur Lösung dieser Aufgabe lehrt die Erfindung eine Vorrichtung zur Abtrennung und/oder Gewinnung von Silikatpartikeln aus pflanzlichem Material, gemäß den beigefügten Ansprüchen.

Die Erfindung geht nach einem ersten Aspekt von der Erkenntnis aus, dass es im Zuge der Herstellung von Faserplatten oder Spanplatten, insbesondere aus Einjahrespflanzen, vorteilhaft ist, Silikate, die sich während des Wachstums in die Pflanze eingelagert haben, von den Pflanzenpartikeln zu separieren, so dass anschließend Pflanzenpartikel, z. B. Späne oder Fasern zur Verfügung gestellt werden können, die im weiteren Prozess einwandfrei verarbeitet werden können. Nach einem ersten Aspekt der Erfindung dient die beschriebene Vorrichtung folglich der Abtrennung der Silikate von den Pflanzenpartikeln mit dem Ziel der Weiterverarbeitung der (von Silikaten befreiten) Pflanzenpartikeln, insbesondere im Zuge der Herstellung von Spanplatten oder Faserplatten.

Darüber hinaus hat die Erfindung nach einem zweiten Aspekt erkannt, dass sich Pflanzen und insbesondere Einjahrespflanzen hervorragend für die Gewinnung und folglich Herstellung von Silikaten eignen, indem mit der erfindungsgemäßen Vorrichtung Silikate von den Pflanzenpartikeln abgetrennt und somit einer weiteren Verwendung zugeführt werden können. Bei diesem zweiten Aspekt der Erfindung steht folglich die Gewinnung der Silikatpartikel aus pflanzlichem Material im Vordergrund, und zwar für eine Verwendung in weiteren industriellen Prozessen oder Produkten.

Es versteht sich, dass diese beiden Aspekte auch miteinander kombiniert werden können, so dass zum einen "silikatfreie" Pflanzenpartikel für die Herstellung von Span- und Faserplatten und zum anderen Silikatpartikel für eine Weiterverarbeitung gewonnen werden können. Bevorzugt meint Silikatpartikel solche mit einem Durchmesser von weniger als 50 µm, vorzugsweise bis zu 20 µm.

Die Erfindung hat erkannt, dass sich die während des Wachstums in die Pflanzen, insbesondere Einjahrespflanzen, eingelagerten Silikate mit dem erfindungsgemäßen Sichter trotz eines einfachen Aufbaus auf einfache Weise überraschend effizient separieren bzw. abscheiden lassen. Silikate bzw. Silikatpartikeln meint im Rahmen der Erfindung folglich insbesondere die während des Wachstums in die Pflanzen bzw. deren Fasern oder Zellen eingelagerten Silikate bzw. Silikatpartikel, die durch Zerkleinerung der Pflanzen und/oder durch Aufschließen der Fasern frei werden. Die Möglichkeit der besonders effektiven Abtrennung solcher Silikate aus pflanzlichem Material mithilfe eines Windsichters hängt unter anderem damit zusammen, dass die Silikate in dem pflanzlichen Material, z. B. in Strohpartikeln oder dergleichen in verhältnismäßig gleichmäßiger Größe und Form vorliegen, und zwar in einer kugelähnlichen Form im Innern der Pflanzenzellen mit einem geringen Durchmesser von in der Regel weniger als 50 µm, z. B. etwa 5 µm bis 20 µm, während die z. B. für eine Weiterverarbeitung bestimmten Pflanzenfaserpartikel deutlich größer sind. In dem Windsichter werden die Silikatpartikel aufgrund ihrer geringen und im Wesentlichen einheitlichen Größe zuverlässig von dem in den Sichter eingebrachten Luftstrom mitgerissen, so dass sie sich mit dem Luftstrom über einen Luftauslass abführen lassen, während die übrigen Partikel, das heißt insbesondere die größeren Pflanzenpartikel nach unten fallen und in einer geeigneten Partikelaufnahme aufgenommen bzw. abgeführt werden. Diese Separation gelingt mit überraschend hoher Effizienz. Das hängt auch damit zusammen, dass die Silikatpartikel aufgrund ihrer sehr geringen (und gleichmäßigen) Dimension gemeinsam mit dem Luftstrom ein Aerosol bilden, so dass die Silikatpartikel als feste Schwebeteilchen in dem Luftstrom (oder einem anderen Gasstrom) zuverlässig transportiert werden. Die Luft (oder ein anderes Gas) bildet folglich ein Trägergas für die Silikatpartikel. Dieses Prinzip und der beschriebene Sichter können zunächst einmal verwendet werden, um störende Silikatpartikel während eines Prozesses für die Herstellung von beleimten Pflanzenpartikeln für die Plattenproduktion abzutrennen, so dass insbesondere Verschleißprobleme in den Anlagenkomponenten während der Herstellung von Platten vermieden werden können und auf aufwendige Maßnahmen zur Verbesserung des Verschleißschutzes in den Anlagen verzichtet werden kann. Außerdem wird die Qualität der Platten durch die Reduzierung des Silikatanteils erheblich verbessert.

Andererseits lässt sich das beschriebene Prinzip und der beschriebene Sichter für eine Abtrennung von Silikatpartikeln aus pflanzlichem Material im Sinne einer Gewinnung von Silikatpartikeln nutzen, so dass pflanzliches Material, z. B. Einjahrespflanzen, ganz gezielt für die Herstellung und folglich Gewinnung von Silikatpartikeln verwendet werden können, wobei die Silikatpartikel nach der Abtrennung einer Weiterverarbeitung zugeführt werden können. Bei diesem Aspekt der Erfindung steht die Verwendung von pflanzlichem Material, z. B. Einjahrespflanzen, für die Gewinnung von Silikaten bzw. Silikatpartikeln im Vordergrund, wobei solche Silikatpartikel z. B. als Zusatz für die Herstellung von Dämmplatten, Brandschutzplatten oder auch als Schleifmittel eingesetzt werden können. Die Herstellung von Silikatpartikeln aus pflanzlichem Material ist damit eine wirtschaftliche und sehr interessante Alternative zu den herkömmlichen Herstellungs- bzw. Gewinnungsverfahren.

Im Vordergrund der Erfindung steht dabei die beschriebene Vorrichtung, die durch einen Windsichter gekennzeichnet ist. Dabei besteht die Möglichkeit, die Zuluft mit einem Zuluftventilator über den Lufteinlass in das Sichtergehäuse einzublasen. In bevorzugter Ausgestaltung erfolgt jedoch eine passive Zuluftzuführung, indem an dem Luftauslass ein Absaugventilator angeschlossen wird. Dabei ist es möglich, in einfacher Weise über den Lufteinlass Luft, z. B. Umgebungsluft in das Sichtergehäuse einzusaugen, wobei der Lufteinlass bevorzugt in geeigneter Weise mit Schutzmaßnahmen, z. B. einem Schutzgitter und/oder einem Regenschutz versehen sein kann. Alternativ besteht auch die Möglichkeit, die Luft im Kreislauf zu führen und folglich die abgesaugte Luft (nach entsprechender Abscheidung der Silikate aus dem Luft/Silikatgemisch) in den Bereich des Lufteinlasses zurückzuführen.

Der Sichter kann eine Trennung in zwei Fraktionen (Pflanzenpartikel, Silikatpartikel) vornehmen. Zusätzlich zu der Partikelaufnahme kann optional auch eine Grobgutaufnahme vorgesehen sein, die ebenfalls unterhalb des Luftauslasses angeordnet ist und die der Partikelaufnahme in Strömungsrichtung vorgeordnet ist. Große und schwere Fremdkörper, z. B. Steine, die mit den Pflanzenpartikeln in die Sichtvorrichtung gelangen, können auf diese Weise abgetrennt und über die Grobgutaufnahme abgeführt werden, so dass in dieser Ausführungsform eine Trennung in drei Fraktionen (Grobgut/Steine, Pflanzenpartikel, Silikatpartikel) erfolgt.

Optional kann nicht nur eine einzige Partikelaufnahme vorgesehen sein, sondern es können auch mehrere (in Strömungsrichtung) hintereinander angeordnete Partikelaufnahmen oder eine Partikelaufnahme mit mehreren (hintereinander angeordneten) Aufnahmezonen vorgesehen sein. Diese Ausgestaltung hat den Vorteil, dass optional eine Aufteilung (der Pflanzenpartikel) in mehrere (Nutz-)Fraktionen möglich ist. In vorteilhafter Weiterbildung kann vorgesehen sein, dass Ort und/oder Länge (entlang der Strömungsrichtung) einer oder mehrerer Partikelaufnahmen oder Aufnahmezonen (variabel) einstellbar sind, und zwar während der Montage und/oder Inbetriebnahme und/oder während des Betriebes. Dieses lässt sich z. B. durch verstellbare Leitbleche im Bereich der Partikelaufnahmen realisieren.

In bevorzugter Weiterbildung weist die Vorrichtung zumindest eine Zerkleinerungsvorrichtung zum Zerkleinern von pflanzlichem Ausgangsmaterial zu streufähigen Pflanzenpartikeln auf, welche dem Windsichter zuführbar sind. Denn von besonderer Bedeutung ist die Tatsache, dass im Zuge einer Zerkleinerung des pflanzlichen Materials die Kammern innerhalb des pflanzlichen Materials aufgebrochen werden, indem die Silikatpartikel eingelagert sind, so dass das Silikat freigegeben und in der beschriebenen Weise abgetrennt werden kann. Eine solche Zerkleinerungsvorrichtung kann rein mechanisch arbeiten, z. B. als Hammermühle, gegebenenfalls mit einem vorgeordneten Strohhäcksler. Bereits durch eine mechanische Zerkleinerung des Materials erfolgt in hohem Maße ein Aufbrechen der Silikatkammern bzw. Pflanzenzellen, so dass anschließend eine Abtrennung der Silikate erfolgen kann.

Erfindungsgemäß erfolgt die Silikattrennung in zwei Stufen.

Das bedeutet, dass eine erste Zerkleinerungsvorrichtung, eine erste Sichtvorrichtung (das heißt ein erster Windsichter), eine zweite Zerkleinerungsvorrichtung und eine zweite Sichtvorrichung (das heißt ein zweiter Windsichter) vorgesehen sind. Die in der ersten Sichtvorrichtung anfallenden Pflanzenpartikel, die bereits in hohem Maße von Silikaten befreit sind, werden der zweiten Zerkleinerungsvorrichtung zugeführt, in der eine erneute bzw. eine weitere Zerkleinerung der Pflanzenpartikel erfolgt, so dass wiederum Silikate freigesetzt werden, die dann in der zweiten Sichtvorrichtung erneut abgetrennt werden. In diesem Fall kann die zweite Zerkleinerungsvorrichtung als Zerfaserungsvorrichtung bzw. als Zerfaserungsanlage zur Erzeugung von Pflanzenpartikeln ausgebildet sein, die als Pflanzenfasern ausgebildet sind. Solche Zerfaserungsanlagen kennt man z. B. aus der MDF-Plattenproduktion. Sie weisen insbesondere einen Refiner auf, in dem in grundsätzlich bekannter Weise die spanartigen Partikel zu Fasern aufgeschlossen werden. Im Zuge dieser Zerfaserung werden die Holzzellen bzw. Pflanzenzellen, in die die Silikatpartikel eingelagert sind, weiter bzw. vollständig aufgebrochen, so dass in dieser zweiten Stufe (erneut) Silikate freigesetzt werden, die anschließend in der zweiten Sichtvorrichtung separiert werden. Interessant ist dabei die Tatsache, dass die erste Sichtvorrichtung und die zweite Sichtvorrichtung hinsichtlich Dimensionierung und Strömungseigenschaften an die jeweiligen Gegebenheiten und insbesondere die Partikeleigenschaften angepasst werden können, so dass in zwei Stufen eine besonders effiziente Silikatabtrennung und damit optional auch Silikatgewinnung möglich wird. Besonders vorteilhaft ist eine solche zweistufige Vorgehensweise auch bei der Herstellung von Pflanzenfasern für die Produktion von Faserplatten, z. B. MDF-Platten. Die zweistufige Separierung von Silikatpartikeln kann aber auch bei der Herstellung von Strohspänen oder dergleichen für die Spanplattenherstellung zweckmäßig sein, wenn keine Zerfaserung in einem Refiner oder dergleichen erfolgt. Auch bei der Herstellung von Spänen ist eine mehrstufige Zerkleinerung zweckmäßig, so dass die zweite Zerkleinerungsvorrichtung dann z. B. als geeignete Mühle ausgebildet sein kann, so dass die zweite Zerkleinerung in einem Mahlprozess erfolgen kann.

Die vorgesehene zweite Sichtvorrichtung ist grundsätzlich in der gleichen Weise ausgebildet, wie die beschriebene erste Sichtvorrichtung. Gegebenenfalls kann es zweckmäßig sein, in der ersten Sichtvorrichtung eine Abtrennung in drei Fraktionen (einschließlich der Abtrennung von Fremdkörpern) vorzusehen und der zweiten Sichtvorrichtung lediglich eine Auftrennung in zwei Fraktionen, so dass dort z. B. auf eine zusätzliche Grobgutaufnahme als "Steinfalle" verzichtet werden kann.

Die erste und/oder zweite Sichtvorrichtung, die als Windsichtvorrichtung arbeitet, weist ein Gehäuse auf, das z. B. in sehr einfacher Ausgestaltung als kastenförmiges Gehäuse ausgebildet sein kann. Ein solches kastenförmiges Gehäuse kann z. B. die Gestalt eines Quaders oder dergleichen aufweisen, wobei sich bevorzugt zumindest der Materialeinlass und der Lufteinlass über (im Wesentlichen) die gesamte Breite des Gehäuses erstrecken. Der Materialeinlass kann z. B. in die (obere) Decke des kastenförmigen Gehäuses integriert sein, und zwar bezogen auf die Strömungsrichtung im vorderen Bereich der Decke, so dass das Material von oben in das kastenförmige Gehäuse fällt. Der Lufteinlass kann in sehr einfacher Ausgestaltung in die Frontwand des Gehäuses integriert sein, und zwar z. B. im oberen Bereich der Frontwand. Der Luftauslass kann z. B. in die der Frontwand gegenüberliegende Rückwand integriert sein bzw. im Bereich der Rückwand angeordnet sein, und zwar z. B. ebenfalls im oberen Bereich dieser Rückwand. Das bedeutet, dass der Luftstrom mit den Silikatpartikeln das Gehäuse im Wesentlichen im oberen Bereich durchströmt, während die Pflanzenpartikel und ggf. Steine oder ähnliches Grobgut aus dem Luftstrom heraus nach unten fallen. Die Partikelaufnahme und/oder die Grobgutaufnahme ist/sind folglich in der Nähe des Bodens des kastenförmigen Gehäuses angeordnet, so dass die Pflanzenpartikel und/oder das Grobgut im unteren Bereich des kastenförmigen Gehäuses aufgenommen werden. Von dort kann es nach unten oder auch seitlich aus dem Gehäuse abgeführt werden. In dem Materialeinlass, der z. B. von einem Fallschacht gebildet werden oder an einem solchen angeschlossen sein kann, können im Übrigen Walzen, z. B. Auflösewalzen integriert sein, um z. B. das einzubringende Material aufzulösen. Damit kann eine Aufteilung des Materials im Eintritt erfolgen, so dass mehrere "Vorhänge" aus den Partikeln erzeugt werden. Außerdem ist es möglich, im Bereich des Materialeinlasses Zuführeinrichtungen, z. B. Zuführschnecken vorzusehen. In die Partikelaufnahme, die z. B. im unteren Bereich des Gehäuses angeordnet ist, kann eine Abführeinrichtung integriert sein oder eine Abführeinrichtung kann an diese Partikelaufnahme angeschlossen sein, welche z. B. eine oder mehrere Abführschnecken aufweisen kann. Alternativ kommen auch andere Abführeinrichtungen, z. B. Förderbänder oder dergleichen in Betracht, Abführschnecken haben jedoch den Vorteil, dass sie im Wesentlichen (gas-)dicht ausgebildet sind, so dass auf weitere Zellradschleusen oder dergleichen verzichtet werden kann. Um einen gasdichten Kammerboden des Sichters herzustellen, kann zusätzlich gegebenenfalls eine Zellradschleuse vorgesehen sein.

Durch besonders einfachen Aufbau und einen besonders wirtschaftlichen Transport zeichnet sich eine Sichtvorrichtung aus, deren (kastenförmiges) Gehäuse aus einem oder mehreren Iso-Frachtcontainern hergestellt ist. So kann das Gehäuse z. B. aus mehreren, z. B. zwei oder drei übereinander angeordneten Standardcontainern hergestellt werden, wobei es sich bevorzugt um 40 ft.-Standardcontainer handelt, die z. B. auch als High-Cube-Container ausgebildet sein können. Die Breite und die Länge des Sichtergehäuses sind in diesem Fall durch die Breite und Länge der Standardcontainer definiert. Dabei geht die Erfindung von der überraschenden Erkenntnis aus, dass trotz eines solch einfachen Aufbaus mit hoher Effizienz Silikatpartikel wirtschaftlich aus dem Partikelstrom abgetrennt werden können. Das Gehäuse lässt sich in Form von Frachtcontainern gleichsam modular zum Einsatzort transportieren und dort fertigstellen.

Das Gehäuse bzw. die Container können dann (nachträglich) noch mit üblichen Wartungsbühnen oder dergleichen ausgerüstet werden, die z. B. außenseitig an den Containern aufgestellt und/oder befestigt werden.

Es besteht grundsätzlich die Möglichkeit, die in der beschriebenen Weise von Silikatpartikeln befreiten Pflanzenpartikel für die Weiterverarbeitung im Zuge der Plattenproduktion einzusetzen. In diesem Fall werden sie bevorzugt einer Beleimungsvorrichtung zugeführt und dort mit einem Bindemittel versehen und folglich beleimt. Eine solche Beleimungsvorrichtung kann in grundsätzlich bekannter Weise ausgebildet sein. Bevorzugt wird eine Beleimungsvorrichtung eingesetzt, die als Trommelmischer ausgebildet ist und die z. B. in der DE 10 2009 057 916 B4 beschrieben ist. Die mit einer Beleimungsvorrichtung beleimten Pflanzenpartikel, z. B. Späne oder Fasern, können in einem grundsätzlich bekannten Prozess weiterverarbeitet werden und z. B. einer Streuvorrichtung zur Erzeugung einer Streugutmatte aus den beleimten Pflanzenpartikeln sowie anschließend einer der Streuvorrichtung nachgeordneten Presse zugeführt werden, in welcher die Streugutmatte unter Anwendung von Druck und/oder Wärme zu einer Platte verpresst wird. Die erfindungsgemäße Sichtvorrichtung kann folglich in eine Gesamtanlage zur Herstellung von Platten integriert werden. Bei der Presse kann es sich um eine Taktpresse handeln, z. B. einer Einetagenpresse oder Mehretagenpresse. Außerdem kann es sich alternativ um eine kontinuierlich arbeitende Presse handeln, die z. B. als Doppelbandpresse ausgebildet ist.

Wie bereits beschrieben, liegt der Erfindung aber auch die Erkenntnis zugrunde, dass insbesondere eine Nutzung der abgetrennten Silikatpartikel erfolgt. Die Erfindung umfasst folglich auch solche Ausführungsformen, bei denen die Silikatabtrennung bzw. Silikatgewinnung aus pflanzlichem Material im Vordergrund steht, ohne dass die Pflanzenpartikel einem weiteren Prozess oder einer weiteren Nutzung zugeführt werden müssen.

Mit der Vorrichtung der beschriebenen Art lässt sich ein Verfahren zur Abtrennung und/oder Gewinnung von Silikatpartikeln aus pflanzlichem Material durchführen. Dieses Verfahren ist dadurch gekennzeichnet, dass aus pflanzlichem Ausgangsmaterial, insbesondere aus Einjahrespflanzen, durch Zerkleinern Pflanzenpartikel erzeugt und dabei Silikatpartikel aus dem Ausgangsmaterial freigesetzt werden, dass die zerkleinerten Pflanzenpartikel (incl. frei gewordener Silikatpartikel) in einem Windsichter mit einem Luftstrom beaufschlagt werden, dass die (frei gewordenen) Silikatpartikel mit dem Luftstrom über einen Luftauslass des Windsichters abgeführt werden und dass die Pflanzenpartikel schwerkraftbedingt von einer unterhalb des Luftauslasses angeordneten Partikelaufnahme aufgenommen und gegebenenfalls abgeführt werden. Die über den Luftauslass abgeführten Silikatpartikel werden anschließend vorzugsweise von dem Luftstrom abgeschieden, z.B. mit einem Zyklon oder einem geeigneten Abscheider, und z. B. einer Sammeleinrichtung zugeführt, wo sie für eine Weiterverarbeitung zur Verfügung stehen. Das Bereitstellen der abgetrennten Silikatpartikel für eine Weiterverarbeitung steht nach einem weiteren Aspekt der Erfindung ebenfalls im Vordergrund.

Bei dem pflanzlichen Ausgangsmaterial handelt es sich insbesondere um Einjahrespflanzen bzw. Teile solcher Einjahrespflanzen, z. B. Stroh, das nach einem Dreschprozess einer Pflanze zurückbleibt. Erfindungsgemäß kann einerseits eine besonders effektive Nutzung dieses Strohs im Zuge der Herstellung von Faserplatten oder Spanplatten erfolgen, und zwar aufgrund der beschriebenen Ausfällung der Silikatanteile und der Vermeidung der bislang bei der Verarbeitung solcher Materialien beobachteten Probleme. Andererseits kann eine effektive Gewinnung von Silikatpartikeln aus solch pflanzlichem Material, z. B. Stroh, erfolgen.

Im Folgenden wird die Erfindung anhand von lediglich Ausführungsbeispielen darstellenden Zeichnungen näher erläutert. Es zeigen
- Fig. 1: in stark vereinfachter schematischer Darstellung eine Vorrichtung zur Abtrennung und/oder Gewinnung von Silikatpartikeln aus pflanzlichem Material,
- Fig. 2: einen Windsichter der Vorrichtung nach Fig. 1 in einer Seitenansicht,
- Fig. 3: den Windsichter nach Fig. 2 in einer Frontansicht,
- Fig. 4: eine Draufsicht auf den Gegenstand nach Fig. 2,
- Fig. 5: einen Schnitt A durch den Gegenstand nach Fig. 3 mit angedeuteten Strömungsverhältnissen.

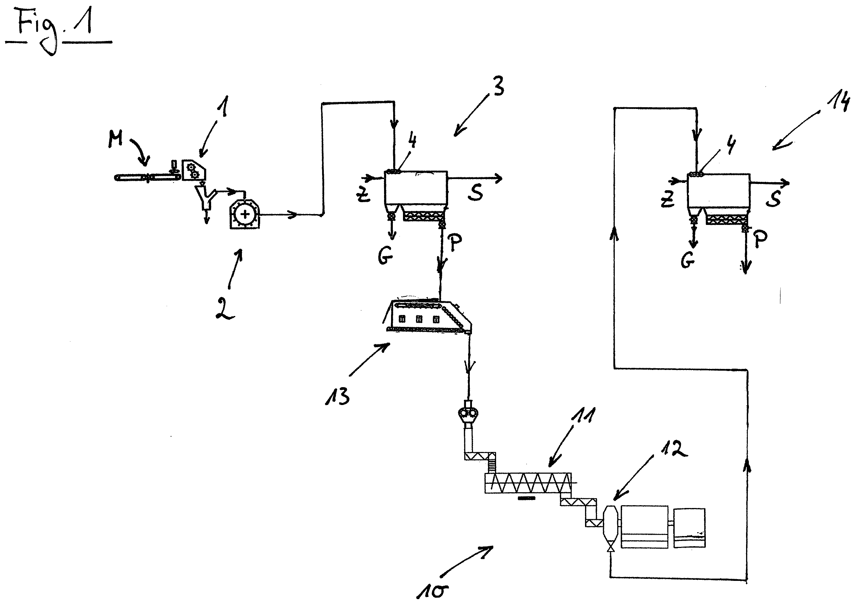

In Fig. 1 ist eine Vorrichtung (bzw. Anlage) dargestellt, mit der sich Silikatpartikel aus pflanzlichem Material abtrennen lassen. Das als Ausgangsmaterial M zur Verfügung gestellte Stroh wird nach einer Vorzerkleinerung in z. B. einem Strohhäcksler 1 in einer ersten Zerkleinerungsvorrichtung 2 zerkleinert, die im Ausführungsbeispiel als Hammermühle 2 ausgebildet sein kann. Das in dieser ersten Zerkleinerungsvorrichtung 2 erzeugte Material wird einer ersten Sichtvorrichtung 3 zugeführt, die eine erste Sichtstufe zum Separieren von Silikatpartikeln aus den Strohpartikeln bildet.

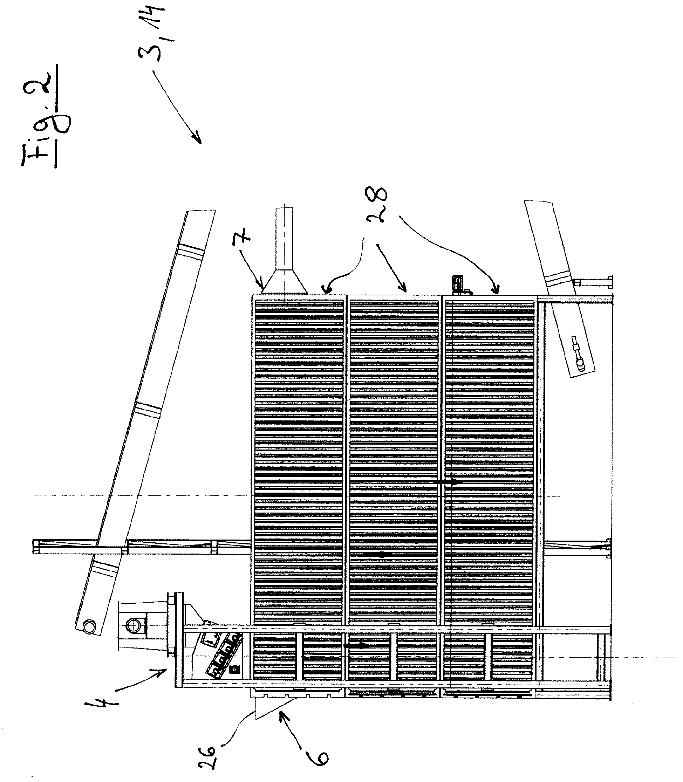

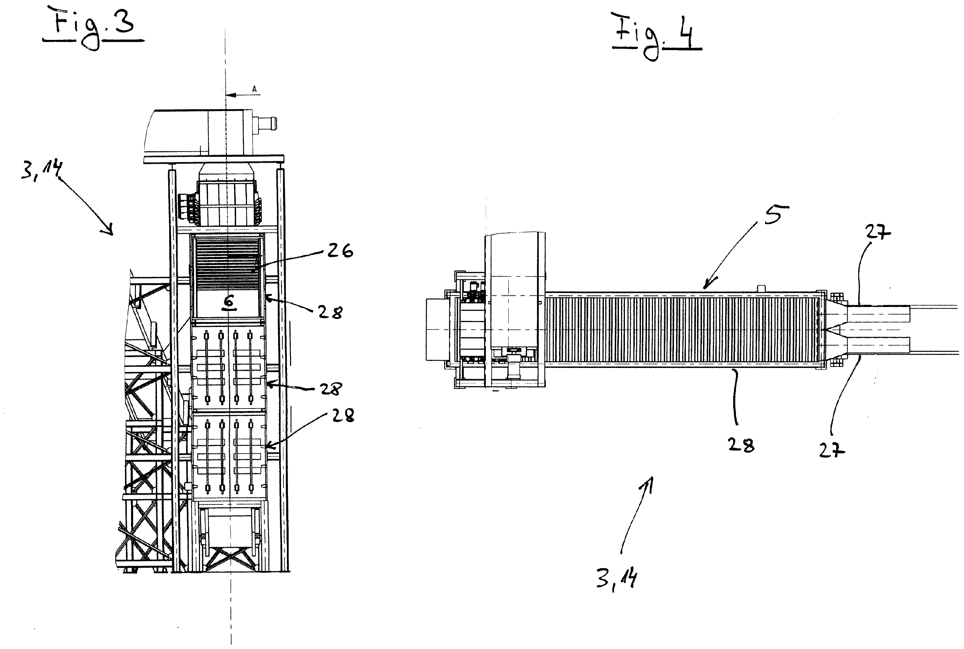

Diese erste Sichtvorrichtung 3 ist vergrößert in den Fig. 2 bis 5 dargestellt, auf die im Folgenden noch näher eingegangen wird.

In einer solchen Sichtvorrichtung 3, die als Windsichter ausgebildet ist, werden die Strohpartikel über einen oberen Materialeinlass 4 in das Sichtergehäuse 5 eingebracht und in dem Sichtergehäuse mit einem Luftstrom (Zuluft Z) beaufschlagt. Dazu weist der Sichter 3 einen vorderen, oberen Lufteinlass 6 und einen hinteren, oberen Luftauslass 7 auf. Unterhalb des Luftauslasses 7 ist eine Partikelaufnahme 8 für die von Silikat S befreiten Strohpartikel P vorgesehen. In dem Ausführungsbeispiel ist der Partikelaufnahme 8 in Strömungsrichtung eine Grobgutaufnahme 9 für die Aufnahme von Fremdkörpern, z. B. Steinen oder dergleichen Grobgut G vorgeordnet. In dieser Sichtvorrichtung werden die (freien) Silikatpartikel S aufgrund ihrer sehr geringen und gleichmäßigen Größe von dem Luftstrom mitgerissen und über den Luftauslass 7 abgeführt, während die Pflanzenpartikel, z. B. Strohpartikel P schwerkraftbedingt im Bereich der Partikelaufnahme 8 gelangen und von dort abgeführt werden können, z. B. über Schnecken 29.

In dem dargestellten Ausführungsbeispiel werden die in der ersten Sichtstufe von Silikat befreiten Strohpartikel in einem weiteren Schritt - gegebenenfalls nach einer Zwischenspeicherung in einem Bunker 13 - einer zweiten Zerkleinerungsvorrichtung 10 zugeführt. Diese zweite Zerkleinerungsvorrichtung 10 kann im Ausführungsbeispiel als Zerfaserungseinrichtung ausgebildet sein, in der aus den Strohpartikeln Strohfasern erzeugt werden, wobei solche Strohfasern grundsätzlich für die Herstellung von Faserplatten zum Einsatz kommen können. Die Zerfaserungseinrichtung 10 kann in grundsätzlich bekannter Weise einen Kocher 11 aufweisen, in dem die Partikel z. B. mit Dampfüberdruck erweicht werden. Daran kann sich in grundsätzlich bekannter Weise ein Refiner 12 anschließen, in dem die erweichten Partikel aufgemahlen werden. Die auf diese Weise aufgemahlenen Fasern können (nach einer Trocknung) nun der zweiten Sichtvorrichtung 14 zugeführt werden und dort erfolgt eine erneute Abtrennung von (freien) Silikatpartikeln aus den Strohpartikeln bzw. den nun erzeugten Strohfasern.

Die in Fig. 1 lediglich angedeutete zweite Sichtvorrichtung 14 ist wiederum als Windsichter ausgebildet. Sie ist grundsätzlich in der gleichen Weise aufgebaut und funktioniert in der gleichen Weise wie die bereits beschriebene erste Sichtvorrichtung 3, wobei im Bereich der zweiten Sichtvorrichtung 14 gegebenenfalls auf die Grobgutaufnahme bzw. Steinfalle verzichtet werden kann. Jedenfalls werden in dieser zweiten Sichtstufe erneut Silikatpartikel S über einen Luftauslass 7 abgeführt und gegebenenfalls gesammelt. Die von Silikat S befreiten Strohfasern P werden wiederum über die Partikelaufnahme 8 abgeführt und gegebenenfalls abgeführt und gesammelt.

Wie bereits beschrieben, weist die Sichtvorrichtung 3 bzw. 14 im Ausführungsbeispiel ein kastenförmiges Gehäuse 5 mit dem Materialeinlass 4, dem Lufteinlass 6, dem Luftauslass 7 sowie der Partikelaufnahme 8 und gegebenenfalls der Grobgutaufnahme 9 auf. An den Materialeinlass 4 ist ein oberer Fallschacht 16 angeschlossen, in dem Walzen, z. B. Auflösewalzen 17 angeordnet sind. Außerdem sind Zuführschnecken 18 angedeutet, über welche das jeweilige Material dem Materialeinlass 4 zugeführt wird. Dabei erstreckt sich der Materialeinlass 4 im Wesentlichen über die gesamte Breite des Sichtergehäuses 5, wobei in dem dargestellten Ausführungsbeispiel der Materialeinlass 4 in die obere Decke des Sichtergehäuses integriert ist, so dass das Material von oben in das Sichtergehäuse fällt. In die vordere Frontwand des Sichtergehäuses ist im oberen Bereich der Lufteinlass 6 integriert. Auch dieser Lufteinlass 6 kann sich über die gesamte Breite des Sichtergehäuses 5 erstrecken. Im Bereich der hinteren Rückwand des Sichtergehäuses ist der Luftauslass 7 angeordnet, wobei sich dieser ebenfalls über die gesamte Breite des Sichtergehäuses erstreckt und dann in eine oder mehrere Auslassleitungen 27 mit reduziertem Durchmesser übergeht, wobei über diese Leitung oder Leitungen 27 die störenden Silikatpartikel S mit dem Luftstrom abgeführt werden. Anschließend können die Silikatpartikel S mit einem geeigneten Abscheider aus dem Luftstrom abgeschieden werden, z. B. mit einem Zyklon. Einzelheiten sind nicht dargestellt. Im Bereich der unteren Partikelaufnahme 8 sind im Ausführungsbeispiel Abführschnecken 29 vorgesehen.

Grundsätzlich besteht die Möglichkeit, die auf diese Weise von Silikat befreiten Pflanzenpartikel, z. B. Pflanzenfasern, für die Herstellung von Platten, z. B. Faserplatten zur Verfügung zu stellen. In diesem Fall besteht die Möglichkeit, die Partikel z. B. einer Streuvorrichtung zuzuführen, mit der dann eine Streugutmatte erzeugt wird, die in einer Presse unter Anwendung von Druck und Wärme zu einer Platte verpresst wird. Einzelheiten sind in den Figuren nicht dargestellt.

Alternativ oder ergänzend kann jedoch auch die Gewinnung von Silikatpartikeln S im Vordergrund stehen. In diesem Fall werden die in der ersten Sichtvorrichtung 3 und/oder der zweiten Sichtvorrichtung 14 abgetrennten Silikatpartikel z. B. in einer nicht dargestellten Sammeleinrichtung gesammelt und gegebenenfalls gespeichert, so dass sie für eine Weiterverarbeitung zur Verfügung gestellt werden können, z. B im Zuge der Herstellung von Brandschutzplatten oder auch als Einsatz für Schleifmittel oder dergleichen.

Die Fig. 1 zeigt dabei ein zweistufiges Verfahren, gemäß der Erfindung.

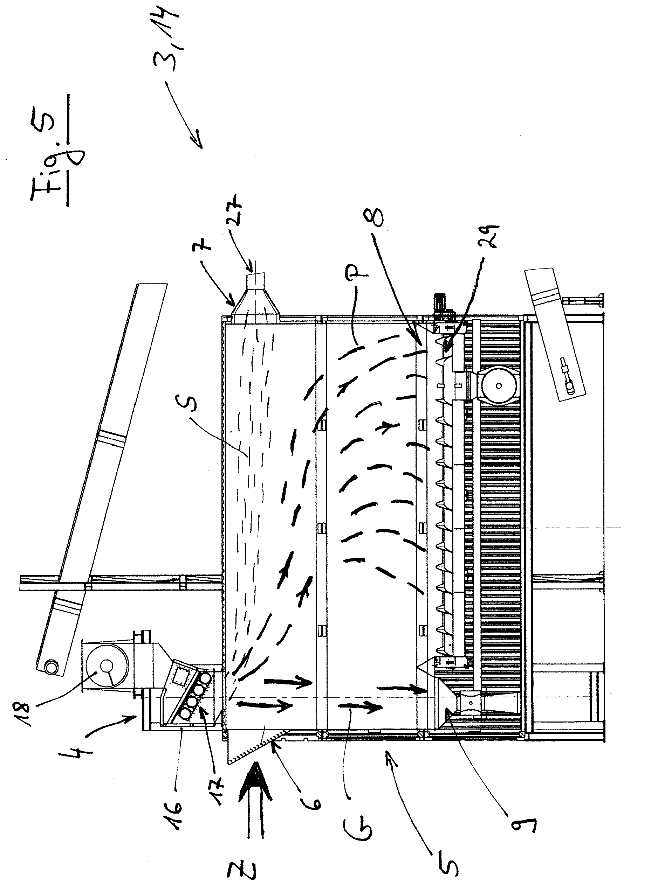

In Fig. 5 sind die Strömungsverhältnisse in dem Sichter gezeigt. Es ist erkennbar, dass die (freien) Silikatpartikel S aufgrund ihrer kleinen Dimension nach Art eines Aerosols mit dem Luftstrom über den oberen Luftauslass 7 und eine oder mehrere Abluftleitungen 27 abgeführt werden, während die Strohpartikel P schwerkraftbedingt herabfallen und in den Bereich der Partikelaufnahme 8 fallen. Grobgut G, z. B. Steine, fallen unmittelbar nach Eintritt in das Gehäuse 5 in dem Bereich der Grobgutaufnahme 9, die auch als "Steinfalle" bezeichnet wird.

Die Strömung innerhalb des Sichters wird im Ausführungsbeispiel über eine Absaugung realisiert, das heißt an den Luftauslass sind jeweils Absaugventilatoren angeschlossen, so dass die Zuluft Z über den Lufteinlass 6 gleichsam passiv zugeführt wird. Dabei kann die Zufuhr von Frischluft erfolgen. Alternativ kann die Frischluft jedoch auch im Kreislauf geführt werden.

Im Übrigen ist in den Fig. 2 bis 4 erkennbar, dass das Sichtergehäuse in der dargestellten Ausführungsform in sehr einfacher Weise aus mehreren Iso-Frachtcontainern hergestellt ist, und zwar aus drei übereinander angeordneten Standardcontainern 28 mit einer Länge von jeweils 40 ft. Eine solche Bauweise hat den großen Vorteil, dass ein einfacher Transport der einzelnen Komponenten erfolgen kann.

Der Lufteinlass 6 kann z. B. sehr einfach durch geöffnete Containertüren realisiert werden. Dabei kann ein Gitter oder dergleichen in den Einlass integriert sein, um das Eindringen von Fremdkörpern zu verhindern. Außerdem kann ein Regenschutz 26 oberhalb des Einlasses angeordnet sein.

## Patentansprüche

1. Vorrichtung zur Abtrennung und/oder Gewinnung von Silikatpartikeln (5) aus pflanzlichem Material, mit
- einer ersten Zerkleinerungsvorrichtung (2) zur Zerkleinerung von pflanzlichem Ausgangsmaterial zu streufähigen Pflanzenpartikeln,
- einer ersten Sichtvorrichtung (3), die als Windsichter (3) ausgebildet ist, der zumindest einen Materialeinlass (4), einen unterhalb des Materialeinlasses (4) angeordneten Lufteinlass (6), einen Luftauslass (7) und zumindest eine unterhalb des Luftauslasses (7) angeordnete Partikelaufnahme (8) aufweist,
wobei aus pflanzlichem Material durch Zerkleinerung in der ersten Zerkleinerungsvorrichtung (2) gewonnene Pflanzenpartikel in der ersten Sichtvorrichtung (3) derart mit einem Luftstrom beaufschlagbar sind, dass in dem pflanzlichen Material enthaltene Silikatpartikel (S) mit dem Luftstrom über den Luftauslass (7) abgeführt werden und die Pflanzenpartikel (P) schwerkraftbedingt von der unterhalb des Luftauslasses (7) angeordneten Partikelaufnahme (8) aufgenommen und abgeführt werden,
**gekennzeichnet durch**
- eine der ersten Sichtvorrichtung (3) nachgeordneten zweiten Zerkleinerungsvorrichtung (10) und
- einer der zweiten Zerkleinerungsvorrichtung (10) nachgeordneten zweiten Sichtvorrichtung (14),
wobei die in der ersten Sichtvorrichtung (3) anfallenden Pflanzenpartikel der zweiten Zerkleinerungsvorrichtung (10) zugeführt werden, in der eine weitere Zerkleinerung der Pflanzenpartikel erfolgt, wobei die durch Zerkleinerung in der zweiten Zerkleinerungsvorrichtung (10) gewonnenen Pflanzenpartikel in der zweiten Sichtvorrichtung (14) derart mit einem Luftstrom beaufschlagbar sind, dass in dem pflanzlichen Material enthaltene Silikatpartikel (S) mit dem Luftstrom über den Luftauslass (7) abgeführt werden und die Pflanzenpartikel (P) schwerkraftbedingt von der unterhalb des Luftauslasses (7) angeordneten Partikelaufnahme (8) aufgenommen und abgeführt werden.

2. Vorrichtung nach Anspruch 1, **dadurch gekennzeichnet, dass** der Windsichter (3, 14) zusätzlich zu der Partikelaufnahme (8) eine dieser in Strömungsrichtung vorgeordnete Grobgutaufnahme (9) für Fremdkörper (G) aufweist.

3. Vorrichtung nach einem der Ansprüche 1 oder 2, **dadurch gekennzeichnet, dass** der Windsichter (3, 14) ein kastenförmiges Gehäuse (5) aufweist, wobei sich der Materialeinlass (4) und/oder der Lufteinlass (6) und/oder der Luftauslass (8) über die gesamte Breite des Gehäuses (5) erstreckt bzw. erstrecken.

4. Vorrichtung nach einem der Ansprüche 1 bis 3, **dadurch gekennzeichnet, dass** in dem Materialeinlass (4) oder in einem daran angeschlossenen Fallschacht (16) mehrere Walzen, z. B. Auflösewalzen (17) angeordnet sind und/oder dass in die Partikelaufnahme (8) eine Abführeinrichtung (29) integriert oder an diese angeschlossen ist, welche z. B. eine oder mehrere Abführschnecken aufweist.

5. Vorrichtung nach einem der Ansprüche 1 bis 4, **dadurch gekennzeichnet, dass** der Materialeinlass (4) in die obere Decke, der Lufteinlass (6) in die Frontwand und der Luftauslass (7) in die der Frontwand gegenüberliegende Rückwand des kastenförmigen Gehäuses (5) integriert sind.

6. Vorrichtung nach einem der Ansprüche 1 bis 5, **dadurch gekennzeichnet, dass** das kastenförmige Gehäuse (5) von mehreren übereinander angeordneten Standard-Frachtcontainern (28) gebildet wird.

## Claims

1. Device for separating and/or obtaining silicate particles (5) from plant-based material with
- a first comminution device (2) for comminuting plant-based raw material into scatterable plant particles,
- a first classifier (3) in the form of an air classifier (3) which comprises at least a material inlet (4), an air inlet (6) arranged underneath the material inlet (4), an air outlet (7) and at least one particle receiver (8) arranged underneath the air outlet (7),
wherein in the first classifier (3), plant particles obtained from plant-based material through comminution in the first comminution device (2) are exposed to an air flow in such a way that silicate particles (S) contained in the plant-based material are removed with the air flow via the air outlet (7) and through the effect of gravity the plant particles (P) are taken up and removed by the particle receiver (8) arranged underneath the air outlet (7),
**characterised by**
- a second comminution device (10) downstream of the first classifier (3) and,
- a second classifier (14) downstream of the second comminution device (10),
wherein the plant particles accruing in the first classifier (3) are supplied to the second comminution device (10) in which further comminution of the plant particles takes place, wherein the plant particles obtained through comminution in the second comminution device (10) are exposed to an air flow in the second classifier (14) is such a way that silicate particles (S) contained in the plant-based material are removed with the air flow via the air outlet (7) and through the effect of gravity the plant particles (P) are taken up and removed by the particle receiver (8) arranged underneath the air outlet (7).

2. Device according to claim 1, **characterised in that** the air classifier (3, 14) in addition to the particle receiver (8), comprises a coarse material receiver (9) for foreign bodies (G) upstream thereof in the direction of flow.

3. Device according to any one of claims 1 or 2, **characterised in that** the air classifier (3, 14) comprises a box-shaped housing (5), wherein the material inlet (4) and/or the air inlet (6) and/or the air outlet (8) extend(s) over the entire width of the housing (5).

4. Device according to any one of claims 1 to 3, **characterised in that** arranged in the material inlet (4) or in a drop chute (16) connected thereto, are several rollers, e.g. opening rollers (17) and/or **in that** a discharge device (29), comprising, for example, one or more discharge screws, is integrated into or connected to the particle receiver (8).

5. Device according to any one of claims 1 to 4, **characterised in that** the material inlet (4) is integrated into the upper ceiling, the air inlet (6) into the front wall and the air outlet (7) into the rear wall opposite the front wall of the box-shaped housing (5) .

6. Device according to any one of claims 1 to 5, **characterised in that** the box-shaped housing (5) is formed by several standard freight containers (28) arranged on top of each other.

## Revendications

1. Dispositif de séparation et/ou d'obtention de particules de silicate (5) à partir de matière végétale, avec
- un premier dispositif de broyage (2) pour broyer une matière initiale végétale en particules végétales dispersibles,
- un premier dispositif de triage (3), qui est constitué comme un séparateur à air (3), qui comporte au moins une entrée de matière (4), une entrée d'air (6) disposée sous l'entrée de matière (4), une sortie d'air (7) et au moins une réception de particules (8) disposée sous la sortie d'air (7),
sachant que les particules végétales obtenues par broyage à partir de la matière végétale dans le premier dispositif de broyage (2) sont soumises dans le premier dispositif de triage (3) à un écoulement d'air de telle manière que les particules de silicate (S) contenues dans la matière végétale sont évacuées avec l'écoulement d'air par la sortie d'air (7) et les particules végétales (P) sont recueillies et évacuées par gravité par la réception de particules (8) disposée sous la sortie d'air (7),
**caractérisé par**
- un deuxième dispositif de broyage (10) disposé en aval du premier dispositif de triage (3), et
- un deuxième dispositif de triage (14) disposé en aval du deuxième dispositif de broyage (10),
sachant que les particules végétales arrivant dans le premier dispositif de triage (3) sont acheminées vers le deuxième dispositif de broyage (10) dans lequel un autre broyage des particules végétales a lieu, sachant que les particules végétales obtenues par broyage dans le deuxième dispositif de broyage (10) sont soumises dans le deuxième dispositif de triage (14) à un écoulement d'air de telle sorte que les particules de silicate (S) contenues dans la matière végétale sont évacuées avec l'écoulement d'air par la sortie d'air (7) et les particules végétales (P) sont recueillies et évacuées par gravité par la réception de particules (8) disposée sous la sortie d'air (7).

2. Dispositif selon la revendication 1, **caractérisé en ce que** le séparateur à air (3, 14) comporte en plus de la réception de particules (8), une réception pour matières grossières (9) disposée en amont de celle-ci en direction d'écoulement pour les corps étrangers (G).

3. Dispositif selon l'une quelconque des revendications 1 ou 2, **caractérisé en ce que** le séparateur à air (3, 14) comporte un boîtier en forme de caisson (5), sachant que l'entrée de matière (4) et/ou l'entrée d'air (6) et/ou la sortie d'air (8) s'étendent sur toute la largeur du boîtier (5).

4. Dispositif selon l'une quelconque des revendications 1 à 3, **caractérisé en ce que** plusieurs rouleaux, par ex. : rouleaux de dissolution (17) sont disposés dans l'entrée de matière (4) ou dans un puits par gravité (16) raccordé à celle-ci et/ou **en ce qu'**un système d'évacuation (29) est intégré dans la réception de particules (8) ou est raccordé à celle-ci, lequel comporte par ex. une ou plusieurs vis sans fin d'évacuation.

5. Dispositif selon l'une quelconque des revendications 1 à 4, **caractérisé en ce que** l'entrée de matière (4) est intégrée dans le plafond supérieur, l'entrée d'air (6) dans la paroi avant et la sortie d'air (7) dans la paroi arrière opposée à la paroi avant du boîtier en forme de caisson (5).

6. Dispositif selon l'une quelconque des revendications 1 à 5, **caractérisé en ce que** le boîtier (5) est formé de plusieurs conteneurs de transport normalisés (28) disposés les uns sur les autres.
